(19) Europäisches Patentamt
European Patent Office
Office européen des brevets

(11) Veröffentlichungsnummer: **0 231 441 B1**

(12) **EUROPÄISCHE PATENTSCHRIFT**

(45) Veröffentlichungstag der Patentschrift:
16.01.91 Patentblatt 91/03

(51) Int. Cl.$^5$: **B03C 7/00**, C01D 3/08

(21) Anmeldenummer: **86115102.5**

(22) Anmeldetag: **31.10.86**

(54) Verfahren und Vorrichtung zur elektrostatischen Trennung von Salzgemengen.

(30) Priorität: 03.02.86 DE 3603165
03.02.86 DE 3603166
03.02.86 DE 3603167

(43) Veröffentlichungstag der Anmeldung:
12.08.87 Patentblatt 87/33

(45) Bekanntmachung des Hinweises auf die
Patenterteilung:
16.01.91 Patentblatt 91/03

(84) Benannte Vertragsstaaten:
BE ES FR GB IT NL

(56) Entgegenhaltungen:
FR-A- 1 471 934
FR-A- 2 349 542

(73) Patentinhaber: KALI + SALZ AG
Friedrich-Ebert-Strasse 160
D-3500 Kassel (DE)

(72) Erfinder: Balzer, Heinrich, Dr.
Siebertsberger Weg 12
D-6432 Heringen (DE)
Erfinder: Burghardt, Hans
Am Dachental 4
D-6431 Hohenroda (DE)
Erfinder: Diekmann, Ralf
August-Rosterg-Strasse 1
D-6432 Heringen (DE)
Erfinder: Fricke, Günter, Dr.
Akazienweg 18
D-6430 Bad Hersfeld (DE)
Erfinder: Geisler, Iring, Dr.
An der Sommerseite 4 a
D-6430 Bad Hersfeld (DE)
Erfinder: Maikranz, Fritz
Hauptstrasse 27
D-6431 Hohenroda (DE)
Erfinder: Neitzel, Ulrich, Dr.
Am Donarbrunnen 28
D-3500 Kassel (DE)

## Beschreibung

Die elektrostatische Aufbereitung von Salzgemengen, insbesondere Kalirohsalzen, erfordert bekanntlich zunächst eine Vermahlung, durch die auch die in dem Rohsalz vorliegenden Verwachsungen weitgehend zerstört werden. Nach dieser Vermahlung soll das Salzgemenge vorteilhaft in Teilchen von 0,5 bis 2 mm Durchmesser vorliegen. Bevor diese Teilchen des Salzgemenges einer elektrostatischen Trennung zugeführt werden können, ist es notwendig, diese Teilchen von Feuchtigkeit zu befreien, chemisch zu konditionieren, um sie dann bei Raumtemperatur oder erhöhter Temperatur triboelektrisch so aufzuladen, daß sie in einem elektrischen Hochspannungsfeld entsprechend ihrer Ladungen voneinander getrennt werden können. Die notwendige triboelektrische Aufladung der Teilchen solcher Salzgemenge ist bekanntlich besonders effektiv, wenn auf den Oberflächen der Teilchen des Salzgemenges chemische Konditionierungsmittel möglichst gleichmäßig verteilt sind. Jedoch ist die gleichmäßige Verteilung der üblicherweise verwendeten relativ geringen Mengen an Konditionierungsmitteln in der vergleichsweise großen Menge des Salzgemenges technisch problematisch und erfordert einen hohen Energieaufwand.

Nach den Angaben der DE-PS 11 80 331 können die chemischen Konditionierungsmittel in fester oder flüssiger Form auf die Oberfläche der Teilchen eines Salzgemenges dadurch aufgebracht werden, daß das Konditionierungsmittel und das Salzgemenge in einem Mischer intensiv vermischt werden.

Weiter ist es aus dieser Veröffentlichung bekannt, die Konditionierungsmittel zunächst an Trägersubstanzen zu adsorbieren und dieses Gemisch dann mit dem Salzgemenge zu vermischen.

Da nach diesem Verfahren ein gleichmäßiges Aufziehen der Konditionierungsmittel auf die Oberfläche der Teilchen des Salzgemenges nicht zu erreichen ist, wird in der DE-PS 26 19 026 empfohlen, das Salzgemenge mit dem in gasförmigen Zustand übergeführten Konditionierungsmittel in Kontakt zu bringen. In dieser Veröffentlichung wird u.a. auch bereits auf die Möglichkeit hingewiesen, das verdampfte Konditionierungsmittel direkt in die Erwärmungs- und Aufladeeinrichtung, wie beispielsweise einen Fließbetttrockner, einzuleiten, und zwar zusammen mit dem heißen Fluidisierungsgas. Bei der großtechnischen Erprobung dieser Möglichkeit zeigt sich jedoch, daß ein wesentlicher Anteil des Konditionierungsmittels verloren geht.

In einem auf diese Weise vorbehandelten Salzgemenge, das in die Aufgabeeinrichtung eines elektrostatischen Freifallscheiders einfließt, können nur etwa 27 bis 38% der ursprünglich eingesetzten Menge an Konditionierungsmitteln wiedergefunden werden.

So ist es nach diesem Verfahren beispielsweise für eine optimale Trennung von Kalirohsalz notwendig, zur Konditionierung wenigstens 50 g Salizylsäure pro t Rohsalz einzusetzen. Davon können in der Scheideraufgabe jedoch nur 17 g Salizylsäure/t Rohsalz wiedergefunden werden. Diese Menge ist etwa der Menge gleich, die sich für eine monomolekulare Belegung der Oberfläche der Salzgemengeteilchen rechnerisch ermitteln läßt und die für eine optimale triboelektrische Aufladung der Teilchen des Salzgemenges völlig ausreicht. Somit gehen während der elektrostatischen Aufbereitung von Salzgemengen erhebliche Mengen an Konditionierungsmitteln verloren und stehen für die beabsichtigte Wirkung nicht mehr zur Verfügung.

Zum Aufbringen der chemischen Konditionierungsmittel ist es bekannt, einen Mischer zu verwenden, in dem etwa 40 bis 100 g Konditionierungsmittel möglichst gleichmäßig auf eine Tonne Salzgemenge verteilt werden. Danach wird das so vorbehandelte Salzgemenge einem Fließbett-Salzaufwärmer zugeführt, in dem die Teilchen des Salzgemenges in einem Luftstrom von definierter relativer Feuchte und entsprechender Temperatur gegenseitig intensiv kontaktiert werden, wobei sie sich selektiv aufladen. Das Vorzeichen der hierbei auf den Komponenten des Salzgemenges erzeugten Ladung hängt von den Konditionierungsmitteln und der Klimatisierung des Luftstroms ab, in dem die triboelektrische Aufladung erfolgt ist. Diese technischen Lehren werden von Singewald und Fricke in "Chem.Ing.Techn." 55 (1983), Seiten 39-45, ausführlich beschrieben.

Sinngemäß das gleiche berichtet Bock in "Chem.Ing. Techn." 53 (1981), Seiten 916-924. Nach dieser Veröffentlichung ist es notwendig, das vermahlene Salzgemenge vor der triboelektrischen Aufladung mit heißer Luft weitgehend zu trocknen, wobei die Bergfeuchte des Salzgemenges und gegebenenfalls das mit dem chemischen Konditionierungsmittel eingebrachte Wasser entfernt werden soll. Nach Abkühlung auf Trenntemperatur ergeben sich hierbei jedoch hohe, die nachfolgende triboelektrische Aufladung und elektrostatische Trennung störende relative Feuchten, da bei dieser Arbeitsweise die an sich erforderlichen großen Luftmengen nicht angewendet werden können.

Dieser technische Aufwand kann nach DE-PS 12 83 771 dadurch vermindert werden, daß die heiße Luft durch wenig Spülluft von geringer Feuchte verdrängt wird, nachdem das Salzgemenge ausreichend getrocknet und erwärmt ist.

Auch in der Veröffentlichung von Singewald in "Kali und Steinsalz" 8 (1980), Seiten 2-8, wird ausdrück-

2

lich beschrieben, daß die Konditionerung des Salzgemenges in einem Mischer erfolgt, während die anschließende Trocknung und Klimatisierung des Salzgemenges in einem Trockner vorgenommen wird.

Das gemäß DE-PS 11 80 331 als Festsubstanz oder als Lösung bzw. auf Trägersubstanzen aufgezogene Konditionierungsmittel läßt sich aufgrund seiner relativ geringen Menge nur mit hohem technischem Aufwand auf den Teilchenoberflächen des Salzgemenges gleichmäßig verteilen. Aus diesen Gründen lehrt die DE-PS 26 19 026, die Konditionierungsmittel in Dampfform auf das Salzgemenge aufzubringen. Auf diese Weise soll es möglich sein, das Konditionierungsmittel zusammen mit der Primärluft auf das Salzgemenge einwirken zu lassen, die zur Erwärmung und zur Aufrechterhaltung des fluidisierten Salzbettes in einem Fließbetttrockner dient.

Bei diesen Arbeitsweisen ist es jedoch notwendig, eine größere Menge an chemischen Konditionierungsmitteln einzusetzen, als an sich für eine wirkungsvolle triboelektrische Aufladung der Teilchen des Salzgemenges erforderlich ist. Offenbar hat dies seine Ursache darin, daß mit der in das fluidisierte Salzbett eingeblasenen Luft nahezu der gesamte Staubanteil des Salzgemenges ausgeblasen wird. Gerade diese Staubteilchen adsorbieren offenbar aufgrund ihrer relativ großen Oberfläche einen sehr erheblichen Anteil des gegebenenfalls dampfförmigen Konditionierungsmittels und entzieht ihn so seinem eigentlichen Zweck.

Der Erfindung liegt die Aufgabe zugrunde, den Bedarf an Konditionierungsmitteln so weit zu senken, daß er der für eine monomolekulare Belegung der Oberflächen der Salzgemengeteilchen notwendigen Menge möglichst nahekommt und trotzdem eine optimale triboelektrische Aufladung mit anschließender elektrostatischer Trennung der Komponenten des Salzgemenges erreicht werden kann sowie alle Einzelschritte der Konditionierung in einer Apparatur zusammenzufassen und dabei energetisch günstige Lösungen zu suchen.

Es wurde ein Verfahren zur elektrostatischen Trennung von Salzgemengen, insbesondere Kalirohsalzen, durch Aufwirbeln des feinvermahlenen Salzgemenges mittels Luft oder Inertgas zu einem Fließbett, in dem das Salzgemenge mit Konditionierungsmitteln in Kontakt gebracht und triboelektrisch aufgeladen wird, bevor es in die Aufgabevorrichtung eines elektrostatischen Freifallscheiders eingeführt und dort in seine Komponenten aufgetrennt wird, gefunden, wobei die Konditionierungsmittel dem Salzgemenge vermischt mit Luft oder Inertgas zugeführt werden. (DE-C-2 619 026)

Danach werden die feinzerteilten festen oder flüssigen Konditionierungsmittel in einem Luft- oder Inertgasstrom von Umgebungstemperatur aufgewirbelt, direkt in einen Bereich des Fließbettes eingeblasen, in dem die Temperatur des Salzgemenges mindestens 45°C beträgt während bei Anwendung verdampfbarer Konditionierungsmittel das in einem Druckluftstrom verdampfte Konditionierungsmittel oberhalb des Anströmbodens in das Bett des fluidisierten Salzgemenges eingeblasen wird, und zwar in einem Bereich des Fließbettes, in dem die Temperatur der Teilchen des Salzgemenges erheblich unter der Temperatur des Druckluftstromes liegt, der das Konditionierungsmittel in Dampfform enthält.

In der Regel ist dieser Zustand gegeben, wenn das Konditionierungsmittel etwa in die Mitte der Länge des Fließbettes in das fluidisierte Salzgemenge eingeblasen wird.

Besonders vorteilhaft wird das Konditionierungsmittel wenig oberhalb des Anströmbodens und unterhalb der darüberliegenden Heizeinrichtungen in das Fließbett des Salzgemenges eingeblasen.

Es kann auch das in einem Druckluftstrom entsprechender Temperatur verdampfte Konditionierungsmittel oberhalb des Anströmbodens in das Bett der fluidisierten Teilchen des Salzgemenges eingeblasen werden, und zwar in einem Bereich des Fließbettes, in dem die Temperatur der Teilchen des Salzgemenges erheblich unter der Temperatur des Druckluftstroms liegt, der das Konditionierungsmittel in Dampfform enthält.

Vorteilhaft liegt die Temperatur der Teilchen des Salzgemenges in dem Bereich des Fließbettes, in dem der das dampfförmige Konditionierungsmittel enthaltende Druckluftstrom auf die Teilchen des Salzgemenges trifft, um etwa 100°C unter der Temperatur des Druckluftstroms, der das Konditionierungsmittel in Dampfform enthält.

In jedem Fall ist es für die Durchführung des Verfahrens der Erfindung vorteilhaft, wenn das Konditionierungsmittel erst dann in das Fließbett des Salzgemenges eingeblasen wird, nachdem dieses von Staub befreit ist.

Es wurde weiter gefunden, daß bei der Durchführung des beanspruchten Verfahrens sich Vorteile ergeben, wenn das Salzgemenge durch die von unten eingeblasenen Luftströme zu einer Betthöhe von 30 bis 120 cm fluidisiert wird.

Nach der ersten Variante des Verfahrens der Erfindung wird das Konditionierungsmittel in feinzerteilter fester Form oder als Flüssigkeit bzw. Lösung in einem Luftstrom von Umgebungstemperatur zerteilt, ohne daß wesentliche Mengen des Konditionierungsmittels in Dampfform vorliegen. Selbstverständlich können anstelle eines Konditionierungsmittels auch Gemische von Konditionierungsmitteln für das Verfahren der Erfindung eingesetzt werden.

Bei Anwendung von feinzerteilten festen oder flüssigen Konditionierungsmitteln werden diese in einem Luftstrom von Umgebungstemperatur erfindungsgemäß direkt in einen Bereich des Fließbettes aus den Teilchen des Salzgemenges eingeblasen, in dem deren Temperatur mindestens 45°C beträgt. Es ist hierbei anzustreben, daß das in dem Luft- oder Inertgasstrom enthaltene Konditionierungsmittel in die heißeste Zone des zum Fließbett aufgewirbelten Salzgemenges eingeblasen wird. Dadurch werden vorzeitige Verdampfungsverluste vermieden, die bisher nur durch eine erhöhte Einsatzmenge an Konditionierungsmitteln kompensiert werden konnten.

Weiter lassen sich unnötige Verluste an Konditionierungsmitteln vermeiden, wenn diese erst dann in das Fließbett des Salzgemenges eingeblasen werden, nachdem dieses weitgehend von mitgeführtem Staub befreit ist. Da hierbei der Staub in einer vorhergehenden Phase des Aufbereitungsverfahrens bereits von dem Salzgemenge abgetrennt wird, bevor dieses mit Konditionierungsmitteln vermischt wird, ist der abgeschiedene Staub von Konditionierungsmittel weitgehend frei und kann unproblematisch im Rahmen eines Lösebetriebes weiterverarbeitet werden.

Bekanntlich wird beim Durchlauf durch einen Fließbetttrockner das Salzgemenge zunächst von Staub befreit und anschließend getrocknet, indem als Fluidisierungsgas vorerhitzte Luft eingesetzt wird. Diese Trocknung des fluidisierten Salzgemenges ist etwa in der Mitte der Länge des Fließbettes beendet, so daß dort die Zone liegt, in der das fluidisierte Salzgemenge die höchste Temperatur im Verfahrensablauf erreicht.

Es hat sich gezeigt, daß eine besonders gute Verteilung des Konditionierungsmittels auf die Oberflächen der Salzteilchen erreicht wird, wenn das in dem Luft-oder Inertgasstrom zerteilte Konditionierungsmittel an dieser Stelle in das Bett der fluidisierten Salzteilchen eingeblasen wird.

Ähnlich günstig wirkt es sich auf die Belegung der Salzteilchen-Oberfläche mit Konditionierungsmitteln aus, wenn der Luft- oder Inertgasstrom mit dem darin verteilten Konditionierungsmittel wenig oberhalb des Anströmbodens und unterhalb der darüberliegenden Heizeinrichtungen in das Fließbett des Salzgemenges eingeblasen wird.

Weiter wirkt sich günstig auf die Verteilung des Konditionierungsmittels aus, wenn das Salzgemenge zu einer Betthöhe von 30 bis 120 cm fluidisiert wird.

Mit dem Verfahren der Erfindung werden unter sonst vergleichbaren Bedingungen bei einem erheblich reduzierten Aufwand an Konditionierungsmitteln die gleichen Trennergebnisse erreicht wie mit dem vorbekannten Verfahren.

Die Maßnahmen dieser Alternative des Verfahrens der Erfindung bewirken außerdem, daß mit der in die Atmosphäre entlassenen Abluft nur noch äußerst geringe Mengen an Konditionierungsmitteln in die Umgebung entlassen werden. Es sind vor allem nach dem Verfahren der Erfindung außer den Einrichtungen, die diese Abluft von Staub befreien, keine weiteren technischen Einrichtungen notwendig, um mitgeführtes Konditionierungsmittel aus der Abluft zu isolieren. Bei Durchführung einer speziellen Variante des erfindungsgemäßen Verfahrens kann der in dem Salzgemenge vorhandene Staub isoliert werden, bevor das Salzgemenge mit Konditionierungsmitteln beaufschlagt wird. Wenn dieser Salzstaub anschließend einem Lösebetrieb zugeführt wird, vermindert sich der pH-Wert der Löselauge nicht, so daß eine besondere Einstellung dieses pH-Wertes bei Einsatz des nach dem Verfahren der Erfindung gewonnenen Salzstaubes nicht erforderlich ist.

Wird dagegen ein bereits mit Konditionierungsmitteln beladener Salzstaub in einen Lösebetrieb eingebracht, so sinkt der pH-Wert der Löselauge dadurch auf etwa 2 und muß dann wieder auf etwa 5 korrigiert werden.

Nach der zweiten Variante des Verfahrens der Erfindung wird das Gemisch heiße Druckluft und dampfförmiges Konditionierungsmittel nicht dem Fluidisierungsgas zugemischt, bevor dieses den Anströmboden der Fließbetteinrichtung passiert, sondern es wird oberhalb des Anströmbodens in das Bett der bereits fluidisierten Teilchen des Salzgemenges eingeblasen. Wesentlich ist dabei, daß der das Konditionierungsmittel enthaltende Druckluftstrom in einem Bereich auf die fluidisierten Teilchen des Salzgemenges trifft, in dem deren Temperatur noch erheblich unter der des heißen Druckluftstroms liegt, der das verdampfte Konditionierungsmittel enthält. Vorteilhaft wird deshalb der das Konditionierungsmittel enthaltende heiße Druckluftstrom unmittelbar am Eintritt des Salzgemenges in das Fließbett eingeblasen.

Unter den vorstehend angegebenen Bedingungen ist gesichert, daß das in Dampfform in dem heißen Druckluftstrom enthaltende Konditionierungsmittel von den Oberflächen der noch kalten Teilchen des Salzgemenges weitestgehend adsorbiert und somit für die anschließende elektrostatische Trennung voll wirksam ist.

Mit dieser zweiten Variante des Verfahrens der Erfindung werden bei sonst vergleichbaren äußeren Bedingungen gegenüber dem Stand der Technik unter Aufwendung wesentlich geringerer Mengen an Konditionierungsmitteln verbesserte Trennergebnisse erreicht.

4

Es wurde eine Vorrichtung mit langgestreckter Fluidisierungskammer, die durch Anströmböden von den darunterliegenden Anströmkammern mit Zuführungsleitungen für das Fluidisierungsgas getrennt ist und Zu- und Abführungseinrichtungen für das Salzgemenge sowie gegebenenfalls Einrichtungen zur Beeinflussung der Temperatur des Fluidisierungsgases aufweist, zur Durchführung des vorstehend beschriebenen Verfahrens der Erfindung gefunden.

Kennzeichnend ist für diese Vorrichtung, daß die langgestreckte Fluidisierungskammer in ihrer Länge in mehrere Teilkammern unterteilt ist, von denen jede mit Zu- und Abführungseinrichtungen für das Fluidisierungsgas ausgerüstet ist, wobei in eine der Teilkammern eine Zuführungseinrichtung für Konditionierungsmittel einmündet.

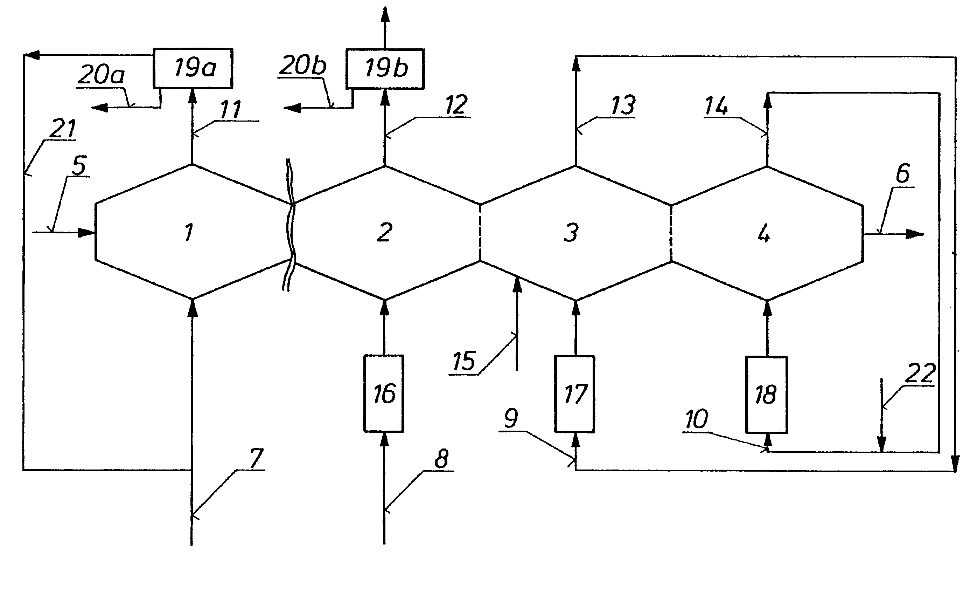

Das Prinzip der Erfindung wird anhand der Figur erläutert, die als Beispiel das Schema einer erfindungsgemäßen Vorrichtung zeigt. Die langgestreckte Fluidisierungskammer ist in mehrere Teilkammern unterteilt, von denen in der Figur die Teilkammern 1, 2, 3 und 4 dargestellt sind. Leitung 5 dient der Zuführung des Salzgemenges zur erfindungsgemäßen Vorrichtung, während durch Leitung 6 das Salzgemenge nach Durchlauf durch die erfindungsgemäße Vorrichtung dem elektrostatischen Scheider zugeführt wird.

Dieser technische Aufwand kann nach DE-PS 12 83 771 dadurch vermindert werden, daß die heiße Luft durch wenig Spülluft von geringer Feuchte verdrängt wird, nachdem das Salzgemenge ausreichend getrocknet und erwärmt ist.

Auch in der Veröffentlichung von Singewald in "Kali und Steinsalz" 8 (1980), Seiten 2-8, wird ausdrücklich beschrieben, daß die Konditionierung des Salzgemenges in einem Mischer erfolgt, während die anschließende Trocknung und Klimatisierung des Salzgemenges in einem Trockner vorgenommen wird.

Das gemäß DE-PS 11 80 331 als Festsubstanz oder als Lösung bzw. auf Trägersubstanzen aufgezogene Konditionierungsmittel läßt sich aufgrund seiner relativ geringen Menge nur mit hohem technischem Aufwand auf den Teilchenoberflächen des Salzgemenges gleichmäßig verteilen. Aus diesen Gründen lehrt die DE-PS 2619 026, die Konditionierungsmittel in Dampfform auf das Salzgemenge aufzubringen. Auf diese Weise soll es möglich sein, das Konditionierungsmittel zusammen mit der Primärluft auf das Salzgemenge einwirken zu lassen, die zur Erwärmung und zur Aufrechterhaltung des fluidisierten Salzbettes in einem Fließbetttrockner dient.

Bei diesen Arbeitsweisen ist es jedoch notwendig, eine größere Menge an chemischen Konditionierungsmitteln einzusetzen, als an sich für eine wirkungsvolle triboelektrische Aufladung der Teilchen des Salzgemenges erforderlich ist. Offenbar hat dies seine Ursache darin, daß mit der in das fluidisierte Salzbett eingeblasenen Luft nahezu der gesamte Staubanteil des Salzgemenges ausgeblasen wird. Gerade diese Staubteilchen adsorbieren offenbar aufgrund ihrer relativ großen Oberfläche einen sehr erheblichen Anteil des gegebenenfalls dampfförmigen Konditionierungsmittels und entzieht ihn so seinem eigentlichen Zweck.

Hieraus stellte sich die Aufgabe, Möglichkeiten zu finden, alle Einzelschritte der Konditionierung in einer Apparatur zusammenzufassen und dabei energetisch günstige Lösungen zu suchen.

Es wurde eine Vorrichtung mit langgestreckter Fluidisierungskammer, die durch Anströmböden von den darunterliegenden Anströmkammern mit Zuführungsleitungen für das Fluidisierungsgas getrennt ist und Zu- und Abführungseinrichtungen für das Salzgemenge sowie gegebenenfalls Einrichtungen zur Beeinflussung der Temperatur des Fluidisierungsgases aufweist, zur Durchführung des vorstehend beschriebenen Verfahrens der Erfindung gefunden.

Kennzeichnend ist für diese Vorrichtung, daß die langgestreckte Fluidisierungskammer in ihrer Länge in mehrere Teilkammern unterteilt ist, von denen jede mit Zu- und Abführungseinrichtungen für das Fluidisierungsgas ausgerüstet ist, wobei in eine der Teilkammern eine Zuführungseinrichtung für Konditionierungsmittel einmündet.

Das Prinzip der Erfindung wird anhand der Figur erläutert, die als Beispiel das Schema einer erfindungsgemäßen Vorrichtung zeigt. Die langgestreckte Fluidisierungskammer ist in mehrere Teilkammern unterteilt, von denen in der Figur die Teilkammern 1, 2, 3 und 4 dargestellt sind. Leitung 5 dient der Zuführung des Salzgemenges zur erfindungsgemäßen Vorrichtung, während durch Leitung 6 das Salzgemenge nach Durchlauf durch die erfindungsgemäße Vorrichtung dem elektrostatischen Scheider zugeführt wird.

Die Teilkammern 1, 2, 3 und 4 sind mit Zuleitung 7, 8, 9 und 10 für das Fluidisierungsgas, vorzugsweise Luft, ausgerüstet und weisen die Ableitung 11, 12, 13 und 14 auf, durch die das Fluidisierungsgas die Teilkammern verläßt. In die Teilkammer 3 mündet die Zuführungseinrichtung 15 für das Konditionierungsmittel ein.

Wenn die langgestreckte Fluidisierungskammer der Vorrichtung der Erfindung beispielsweise in nur drei Teilkammern unterteilt ist, so beträgt die Länge der ersten Teilkammer vorzugsweise 25 bis 40%, der zweiten Teilkammer vorzugsweise 25 bis 50% und der dritten Teilkammer vorzugsweise 20 bis 40% der Gesamtlänge der langgestreckten Fluidisierungskammer. Besonders vorteilhaft soll die Summe der Länge der Teilkammern 3 und 4 40 bis 60% der Gesamtlänge der langgestreckten Fluidisierungskammer betragen.

Für eine Temperaturregelung in den einzelnen Teilkammern 2, 3, 4 kann es vorteilhaft sein, diesen zusätzliche Wärmetauscher 16, 17 bzw. 18 zuzuordnen, die in die Zuleitungen 8, 9 bzw. 10 für das Fluidisierungsgas und/oder unter den Anströmböden der einzelnen Teilkammern 2, 3 bzw. 4 angeordnet sein können.

Weiter hat es sich bewährt, wenn die Abführungseinrichtung 11 für das Fluidisierungsgas, zumindest der ersten Teilkammer 1, mit einer Entstaubungseinrichtung 19 verbunden ist, während die Abführungseinrichtungen 13 und 14 aus anderen Teilkammern 3 und 4, die das Ende der langgestreckten Fluidisierungskammer bilden, in die Zuführungseinrichtungen 9 bzw. 10 für das Fluidisierungsgas der jeweils gleichen Teilkammer 3 bzw. 4 einmünden.

Jeweils abhängig von den örtlichen Gegebenheiten kann es aber auch technisch vorteilhaft sein, wenn die Abführungseinrichtungen 11, 12, 13 und 14 für das Fluidisierungsgas zusammengeführt in eine Entstaubungseinrichtung einmünden, deren Abgasleitung in die Zuführungsleitung für das Fluidisierungsgas einmündet.

Die Vorrichtung der Erfindung, deren langgestreckter Fluidisierungskammer durch Leitung 5 das zu behandelnde Salzgemenge zugeführt wird, bewirkt in der ersten Teilkammer eine Entstaubung des Salzgemenges, wobei der Salzstaub mit dem Abgas durch Leitung 11 in die Entstaubungseinrichtung 19a eingeführt wird, die beispielsweise als Zyklon ausgebildet sein kann. Der von dem Abgas getrennte Staub wird über Leitung 20a aus der Entstaubungseinrichtung 19a ausgeführt, während das staubfreie Abgas über Leitung 21 wieder in die Zuleitung 7 für das Fluidisierungsgas eingespeist und so im Kreislauf geführt wird. In der Teilkammer 2 soll das aus der Teilkammer 1 zufließende Salzgemenge getrocknet werden. Hierzu wird dieser Teilkammer 2 durch Leitung 8 das Fluidisierungsgas zugeführt, das im Wärmetauscher 16 auf eine vorbestimmte Temperatur aufgewärmt wird. Das feuchte Abgas aus dieser Teilkammer 2 wird über Leitung 12 der Entstaubungseinrichtung 19b zugeführt, wo es von mitgeführtem Salzstaub befreit und in die Atmosphäre entlassen wird. Die Unterteilung der langgestreckten Fluidisierungskammer in die einzelnen Teilkammern kann beispielsweise durch Wehre erfolgen, die an der Grenze zwischen zwei Teilkammern in der erfindungsgemäßen Vorrichtung angeordnet sind.

Die nächste Teilkammer 3, in die das fluidisierte Salzgemenge einfließt, ist mit der Zuführungseinrichtung 15 für das Konditionierungsmittel verbunden. Über Leitung 9 wird dieser Teilkammer 3 das Fluidisierungsgas zugeführt, nachdem es im Wärmetauscher 17 auf die vorbestimmte Temperatur gebracht worden ist. Das Fluidisierungsgas verläßt die Teilkammer 3 durch Leitung 13, die das Fluidisierungsgas im Kreislauf in Leitung 9 einspeist.

Die letzte Teilkammer 4, in der die Teilchen des Salzgemenges triboelektrisch aufgeladen werden, ist mit einem entsprechenden Gaskreislauf durch Leitung 10, dem Wärmetauscher 18, die Abgasleitung 14 ausgerüstet, wobei diesem Kreislauf durch Leitung 22 auch Wasser zudosiert werden kann, um in dem Fluidisierungsgas die gewünschte relative Feuchte einstellen zu können, die für eine optimale triboelektrische Aufladung der Teilchen des Salzgemenges erforderlich ist.

Selbstverständlich kann die langgestreckte Fluidisierungskammer der erfindungsgemäßen Vorrichtung in nur drei oder mehr als vier Teilkammern unterteilt sein. Wesentlich ist dabei nur, daß die Gesamtlänge der Teilkammern, in denen die triboelektrische Aufladung der Teilchen des Salzgemenges bewirkt werden soll, etwa 40 bis 60% der Gesamtlänge der langgestreckten Fluidisierungskammer beträgt. Es sind dies in der Regel die Teilkammern, die, beginnend mit der Teilkammer, in die das Konditionierungsmittel eingeleitet wird, das Austragende der langgestreckten Fluidisierungskammer bilden.

Die Vorrichtung der Erfindung minimiert die Menge des pro Tonne Salzgemenge notwendigen Konditionierungsmittels im Vergleich zu den Möglichkeiten des Standes der Technik, da das vermahlene Salzgemenge vor der Konditionierung von Salzstaub befreit ist.

Weiterhin ergibt sich der Vorteil, daß der in den ersten Teilkammern aus dem Salzgemenge ausgeblasene Salzstaub nicht mit Konditionierungsmitteln verunreinigt ist und deshalb ohne weiteres in jedem Aufbereitungsbetrieb weiterverarbeitet werden kann.

Letztlich bietet die Anordnung der einzelnen Vorrichtungsteile zueinander, insbesondere die Kreislaufführung der Gasströme, den Vorteil, daß die Vorrichtung der Erfindung mit einem Minimum an Energieaufwand betrieben werden kann.

Für die Durchführung der nachstehenden Beispiele 1 bis 3 ist ein vermahlenes Kalirohsalz mit 10,6 Gew.-% $K_2O$ eingesetzt worden, das im übrigen folgende Zusammensetzungen hat :

```
16,8 Gew.-% Sylvin
21,9 Gew.-% Kieserit
60,3 Gew.-% Steinsalz
 1,0 Gew.-% Anhydrit
```

Die als Konditionierungsmittel eingesetzte Salicylsäure wird dampfförmig in das fluidisierte, aufgeheizte Kalirohsalz eingeblasen. Das Salzgemenge wird so mit dem Konditionierungsmittel in innigen Kontakt gebracht, triboelektrisch aufgeladen und in einem Freifallscheider bei einer Feldstärke von 4 kV/cm in Wertstoffkonzentrat und Rückstand getrennt. Das in dem Scheider anfallende Mittelgut wird im Kreislauf geführt und somit vollständig aufgearbeitet.

Beispiel 1 (Stand der Technik nach DE-PS 26 19 026)

In einer Rohrschurre werden 75 g/t Salicylsäure auf das Kalirohsalz zur Einwirkung gebracht, das in einer Menge von 100 t/h eingesetzt wird, d.h., es werden 7,5 kg/h Salicylsäure verwendet. Die relative Feuchte der Luft während der Aufladung der Teilchen ist 12%, die Salztemperatur 51°C. Am Scheideraustrag werden erhalten :

|  | Wertstoffkonzentrat | Rückstand |
|---|---|---|
| Menge t/h | 49,4 | 50,6 |
| % $K_2O$ | 19,2 | 1,47 |
| % Sylvin | 30,4 | 2,3 |
| % Kieserit | 51,9 | 6,02 |
| % Steinsalz | 16,9 | 90,4 |
| % Anhydrit | 0,8 | 1,3 |
| g/t Salicylsäure | 42,0 | 39,0 |
| kg/h Salicylsäure | 2,1 | 2,0 |

Die $K_2O$-Ausbeute beträgt 92,7 %, und der Verlust an Salicylsäure beträgt 3,4 kg/h oder 45,3 %.

Beispiel 2 (Stand der Technik nach DE-PS 26 19 026)

In das auf eine Temperatur von 100°C vorgeheizte Fluidisierungsgas eines Fließbetttrockners wird vor dem Durchtritt durch den Anströmboden dampfförmige Salicylsäure in einer Menge von 50 g/t Kalirohsalz eingespeist, das dem Fließbetttrockner in einer Menge von 100 t/h zugeführt wird. Die relative Feuchte der Luft während der Aufladung der Teilchen ist 13%, die Salztemperatur 48°C.

Am Scheideraustrag werden erhalten:

|  | Wertstoffkonzentrat | Rückstand |
|---|---|---|
| Menge t/h | 48,0 | 52,0 |
| % $K_2O$ | 19,9 | 1,30 |
| % Sylvin | 31,5 | 2,0 |
| % Kieserit | 53,3 | 6,0 |
| % Steinsalz | 14,6 | 90,6 |
| % Anhydrit | 0,6 | 1,4 |
| g/t Salicylsäure | 30,0 | 28,0 |
| kg/h Salicylsäure | 1,4 | 1,5 |

Die $K_2O$-Ausbeute beträgt 93,4 %, und der Verlust an Salicylsäure beträgt 2,1 kg/h oder 42 %.

Beispiel 3 (1. Variante der Erfindung)

Das vermahlene Kalirohsalz wird in einer Menge von 100 t/h mit einer Temperatur von 19°C in den Fließbetttrockner eingespeist, in den unmittelbar am Einlauf des Kalirohsalzes, aber oberhalb des Anströmbodens in einem auf etwa 190°C vorgewärmten Druckluftstrom dampfförmige Salicylsäure in einer Menge von 25 g/t eingeblasen wird. Die relative Feuchte der Luft beträgt 13%, die Salztemperatur 49°C.

Am Scheideraustrag werden erhalten:

|  | Wertstoffkonzentrat | Rückstand |
|---|---|---|
| Menge in t/h | 48,5 | 51,5 |
| % $K_2O$ | 19,76 | 1,25 |
| % Sylvin | 31,3 | 2,0 |
| % Kieserit | 53,5 | 5,3 |
| % Steinsalz | 14,4 | 91,5 |
| % Anhydrit | 0,8 | 1,2 |
| g/t Salicylsäure | 22,0 | 18,0 |
| kg/h Salicylsäure | 1,1 | 0,9 |

Die $K_2O$-Ausbeute beträgt 93,7 %, und der Verlust an Salicylsäure beträgt 0,5 kg/h oder 20 %.

Die nachstehenden Beispiele 4 und 5 zeigen außerdem, daß die Verluste mit dem Verfahren der Erfindung erheblich vermindert werden.

Für die Durchführung dieser Beispiele wird ein vermahlenes Kalirohsalz mit 10,2 Gew.-% $K_2O$ eingesetzt, das im übrigen folgende Zusammensetzungen hat :

```
16,2 Gew.-% Sylvin
28,7    "    Kieserit
54,1    "    Steinsalz
 1,0    "    Anhydrit.
```

Das Kalirohsalz wird jeweils mit Salicylsäure als Konditionierungsmittel behandelt.

Das Kalirohsalz wird anschließend in Luft mit einer relativen Feuchte von 10% auf eine Temperatur von 50°C aufgewärmt, triboelektrisch aufgeladen und in einem Freifallscheider mit einer Feldstärke von 4 kV/cm in Wertstoffkonzentrat und Rückstand getrennt. Das in dem Scheider anfallende Mittelgut wird im Kreislauf geführt und somit vollständig aufgearbeitet.

Beispiel 4 (Stand der Technik nach DE-PS 26 19 026)

In einer Rohrschurre werden 75 g/t Salicylsäure in Dampfform auf das Kalirohsalz zur Einwirkung gebracht, das in einer Menge von 100 t/h eingesetzt wird, d.h., es werden 7,5 kg/h Salicylsäure verwendet. Am Scheideraustrag werden erhalten :

|  | Wertstoffkonzentrat | Rückstand |
|---|---|---|
| Menge t/h | 40,7 | 48,1 |
| % $K_2O$ | 19,3 | 1,7 |
| % Sylvin | 25,6 | 2,2 |
| % Kieserit | 32,0 | 2,0 |
| % Steinsalz | 23,6 | 92,8 |
| % Anhydrit | 0,4 | 1,3 |
| g/t Salicylsäure | 49,0 | 36,0 |
| kg/h Salicylsäure | 2,0 | 1,7 |

Die $K_2O$-Ausbeute beträgt 90,6 %, und der Verlust an Salicylsäure beträgt 3,8 kg/h oder 50,7 %.

Beispiel 5 (Erfindung)

Das vermahlene Kalirohsalz wird in einer Menge von 100 t/h mit einer Temperatur von 19°C in den Fließbetttrockner eingeschleust, fluidisiert und aufgeheizt. Die feste Salicylsäure wird in der Mitte der Länge des Fließbettes oberhalb des Anströmbodens, aber unterhalb der darüberliegenden Heizeinrichtungen in einer Menge von 33 g/t (= 3,3 kg/h) in das fluidisierte Salzgemenge eingeblasen.

Am Scheideraustrag werden erhalten:

|  | Wertstoffkonzentrat | Rückstand |
|---|---|---|
| Menge in t/h | 40,0 | 47,5 |
| % $K_2O$ | 19,1 | 1,6 |
| % Sylvin | 26,1 | 2,0 |
| % Kieserit | 34,4 | 2,7 |
| % Steinsalz | 24,4 | 92,2 |
| % Anhydrit | 0,5 | 1,3 |
| g/t Salicylsäure | 28,0 | 24,0 |
| kg/h Salicylsäure | 1,1 | 1,1 |

Die $K_2O$-Ausbeute beträgt 90,9 %, und der Verlust an Salicylsäure beträgt 1,0 kg/h oder 30,3 %.

Beispiel 6

Zur Durchführung dieses Beispiels wird eine erfindungsgemäße Vorrichtung eingesetzt, deren langgestreckte Fluidisierungskammer in ihrer Länge durch entsprechend angeordnete Wehre in vier Teilkammern unterteilt ist, von denen jede mit Zu- und Abführungseinrichtungen für Luft als Fluidisierungsgas ausgerüstet ist. In die dritte Teilkammer mündet eine Zuführungseinrichtung für Konditionierungsmittel.

Als Salzgemenge wird ein triboelektrisch schwer aufladbares Kali-Hartsalz folgender Zusammensetzung eingesetzt:

| | | |
|---|---|---|
| $K_2O$ | 9,2 | Gew.-% |
| Sylvin | 12,6 | " |
| Carnallit | 7,1 | " |
| Kieserit | 14,1 | " |
| Steinsalz | 65,1 | " |
| Anhydrit | 1,1 | " |

das in einer Menge von 100 t/h in die erste Teilkammer der erfindungsgemäßen Vorrichtung eingespeist wird. Hier wird das Salzgemenge mittels eines Luftstroms, der mit einer Temperatur von 18°C durch den Anströmboden der ersten Teilkammer geblasen wird, fluidisiert. Mit dem aus dieser Teilkammer abziehenden Luftstrom werden 10 t/h oder 10 Gew.-% der eingesetzten Menge an Salzstaub ausgetragen, in einem Zyklon abgeschieden und in einem Lösebetrieb weiterverarbeitet. Die aus dem Zyklon abziehende Luft wird durch die erste Teilkammer im Kreislauf geführt. Das in einer Menge von 90 t/h in die zweite Teilkammer einfließende Salzgemenge wird hier durch einen Luftstrom mit einer Temperatur von etwa 120°C weiter fluidisiert und weitgehend von anhaftender Feuchtigkeit befreit.

In der dritten Teilkammer wird das Salzgemenge durch einen Luftstrom mit einer Temperatur von etwa 50°C und einer absoluten Feuchte von 9 g/m³ fluidisiert.

Durch die Zuführungseinrichtung für Konditionierungsmittel werden dem Salzgemenge in dieser Teilkammer 37 g/t oder 3,3 kg/h Salicylsäure sowie 60 g/t oder 5,4 kg/h Milchsäure zugemischt und das Salzgemenge damit konditioniert. Die als Fluidisierungsgas in dieser Teilkammer verwendete Luft wird im Kreislauf geführt. Der Wassergehalt des Fluidisierungsgases wird regelmäßig überwacht. Im Bedarfsfall kann ein Teilstrom ausgeführt und durch Frischluft mit einem geeigneten Wassergehalt ersetzt werden.

Das Salzgemenge wird nach Übergang in die vierte teilkammer durch einen Luftstrom mit einer Tem-

10

peratur von 50°C und einer absoluten Feuchte von 9 g/m³ fluidisiert und triboelektrisch aufgeladen.

Die Summe der Längen der dritten und vierten Teilkammer beträgt dabei 40% der Gesamtlänge der langgestreckten Fluidisierungskammer.

Die nachfolgende Trennung des Salzgemenges in einem elektrostatischen Freifallscheider führt zu folgendem Ergebnis :

| | Konzentrat | | Rückstand | |
|---|---|---|---|---|
| | c(%) | μ (%) | c(%) | μ (%) |
| % eff. Menge | | 48,6 | | 51,4 |
| $K_2O$ | 17,4 | 92,4 | 1,4 | 7,6 |
| Sylvin | 23,9 | 92,2 | 1,9 | 7,8 |
| Carnallit | 13,7 | 93,7 | 0,9 | 6,3 |
| Kieserit | 26,4 | 90,9 | 2,5 | 9,1 |
| NaCl | 35,1 | 26,2 | 93,4 | 73,8 |
| Anhydrit | 0,9 | 39,6 | 1,3 | 60,4 |

## Beispiel 7

In der in Beispiel 6 angegebenen Vorrichtung wird als Salzgemenge ein triboelektrisch leicht aufladbares Hartsalz folgender Zusammensetzung :

| | | |
|---|---|---|
| $K_2O$ | 11,9 | Gew.-% |
| Sylvin | 18,9 | " |
| Kieserit | 18,5 | " |
| Steinsalz | 62,1 | " |
| Anhydrit | 0,5 | " |

in einer Menge von 100 t/h eingeführt. In der ersten Teilkammer wird dieses Salzgemenge mittels eines Luftstroms fluidisiert, der mit einer Temperatur von etwa 18°C durch den Anströmboden geblasen wird. Mit dem aus dieser Teilkammer abziehenden Luftstrom werden 88 t/h oder 12 Gew.-% des eingesetzten Salzgemenges als Salzstaub ausgetragen, in einem Zyklon abgeschieden und einem Lösebetrieb zugeführt. Die aus dem Zyklon abziehende Luft wird durch die erste Teilkammer im Kreislauf geführt.

In der zweiten Teilkammer wird die Fluidisierung des Salzgemenges durch einen Luftstrom mit einer Temperatur von etwa 110°C weiter aufrechterhalten und das Salzgemenge weitgehend von anhaftender Feuchtigkeit befreit.

In der dritten Teilkammer wird das fluidisierte Salzgemenge durch einen Luftstrom mit einer Temperatur von etwa 45°C und einer absoluten Feuchte von 9,5 g/m³ fluidisiert und auf eine Temperatur von 53°C gebracht. Durch die Zuführungseinrichtung für Konditionierungsmittel werden in diese Teilkammer außerdem 31 g/t oder 27 kg/h Salicylsäure sowie 55 g/t oder 4,8 kg/h an Milchsäure eingeführt und das fluidisierte Salzgemenge auf diese Weise konditioniert. Die als Fluidisierungsgas in dieser Teilkammer verwendete Luft wird im Kreislauf geführt. Gegebenenfalls wird ein Teilstrom ausgeführt und durch Frischluft ersetzt.

Das Salzgemenge wird nach Übergang in die vierte Teilkammer durch einen Luftstrom mit einer Temperatur von 53°C und einer absoluten Feuchte von 9,5 g/m³ fluidisiert und triboelektrisch aufgeladen. Auch die in dieser Teilkammer verwendete Luft wird im Kreislauf geführt.

Die Summe der Längen der dritten und vierten Teilkammer beträgt dabei 60% der Gesamtlänge der langgestreckten Fluidisierungskammer.

Die nachfolgende Trennung des Salzgemenges in einem elektrostatischen Freifallscheider führte zu folgendem Ergebnis :

|  | Konzentrat | | Rückstand | |
| --- | --- | --- | --- | --- |
|  | c(%) | μ (%) | c(%) | μ (%) |
| % eff. Menge |  | 47,6 |  | 52,4 |
| $K_2O$ | 23,2 | 94,2 | 1,3 | 5,8 |
| Sylvin | 36,7 | 94,2 | 2,1 | 5,8 |
| Kieserit | 37,2 | 92,5 | 2,7 | 7,5 |
| Steinsalz | 25,7 | 19,8 | 94,7 | 80,2 |
| Anhydrit | 0,4 | 42,0 | 0,5 | 58,0 |

**Ansprüche**

1. Verfahren zur elektrostatischen Trennung von Salzgemengen, insbesondere Kalirohsalzen, durch Aufwirbeln des feinvermahlenen Salzgemenges mittels Luft oder Inertgas zu einem Fließbett, in dem das Salzgemenge mit Konditionierungsmitteln in Kontakt gebracht und triboelektrisch aufgeladen wird, bevor es in die Aufgabevorrichtung eines elektrostatischen Freifallscheiders eingeführt und dort in seine Komponenten aufgetrennt wird, wobei die Konditionierungsmittel dem Salzgemenge vermischt mit Luft oder Inertgas zugeführt werden, dadurch gekennzeichnet, daß feinzerteilte feste oder flüssige Konditionierungsmittel in einem Luft- oder Inertgasstrom von Umgebungstemperatur aufgewirbelt direkt in einen Bereich des Fließbettes eingeblasen werden, in dem die Temperatur des Salzgemenges mindestens 45°C beträgt, während bei Anwendung verdampfbarer Konditionierungsmittel das in einem Druckluftstrom verdampfte Konditionierungsmittel oberhalb des Anströmbodens in das Fließbett des Salzgemenges eingeblasen wird, und zwar in einem Bereich des Fließbettes, in dem die Temperatur der Teilchen des Salzgemenges erheblich unter der Temperatur des Druckluftstroms liegt, der das Konditionierungsmittel in Dampfform enthält.

2. Verfahren nach Anspruch 1, dadurch gekennzeichnet, daß bei Anwendung fester oder flüssiger Konditionierungsmittel diese etwa in der Mitte der Länge des Fließbettes in das fluidisierte Salzgemenge eingeblasen werden.

3. Verfahren nach Ansprüchen 1 und 2, dadurch gekennzeichnet, daß das Konditionierungsmittel wenig oberhalb des Anströmbodens und unterhalb der darüberliegenden Heizeinrichtung in das Fließbett des Salzgemenges eingeblasen wird.

4. Verfahren nach Anspruch 3, dadurch gekennzeichnet, daß die Temperatur der Teilchen des Salzgemenges in dem bereich des Fließbettes, in dem der das dampfförmige Konditionierungsmittel enthaltende Druckluftstrom auf die Teilchen des Salzgemenges trifft, um etwa 100°C unter der Temperatur des Druckluftstroms liegt, der das Konditionierungsmittel in Dampfform enthält.

5. Verfahren nach Ansprüchen 1 bis 4, dadurch gekennzeichnet, daß das Konditionierungsmittel erst dann in das Fließbett des Salzgemenges eingeblasen wird, nachdem dieses weitgehend von mitgeführtem Staub befreit ist.

6. Verfahren nach Ansprüchen 1 bis 5, dadurch gekennzeichnet daß das Salzgemenge zu einer Betthöhe von 30 bis 120 cm fluidisiert wird.

7. Vorrichtung mit langgestreckter Fluidisierungskammer, die durch Anströmböden von den darunterliegenden Anströmkammern mit Zuführungsleitungen für das Fluidisierungsgas getrennt ist und Zu-und Abführungseinrichtungen für das Salzgemenge sowie gegebenenfalls Einrichtungen zur Beeinflussung der Temperatur des Fluidisierungsgases aufweist zur Durchführung des Verfahrens nach Ansprüchen 1 bis 6 dadurch gekennzeichnet, daß die langgestreckte Fluidisierungskammer in ihrer Länge in mehrere Teilkammern unterteilt ist, von denen jede mit Zu-und Abführungseinrichtungen für das Fluidisierungsgas ausgerüstet ist, wobei in eine der Teilkammern eine Zuführungseinrichtung für Konditionierungsmittel einmündet.

8. Vorrichtung nach Anspruch 7, dadurch gekennzeichnet, daß die langgestreckte Fluidisierungskammer in drei Teilkammern unterteilt ist, wobei die Länge der ersten Teilkammer 20 bis 40%, der zweiten Teilkammer 40 bis 50% und der dritten Teilkammer 20 bis 40% der Gesamtlänge der langgestreckten Fluidisierungskammer beträgt.

9. Vorrichtung nach Ansprüchen 7 bis 8, dadurch gekennzeichnet, daß die Summe der Längen der Teilkammern von der Teilkammer mit der Zuführungseinrichtung für das Konditionierungsmittel bis zum Ende der langgestreckten Fluidisierungskammer 40 bis 60% der Gesamtlänge der Langgestreckten Fluidisierungskammer beträgt.

10. Vorrichtung nach Ansprüchen 7 bis 9, dadurch gekennzeichnet, daß den Teilkammern (1, 2, 3 und 4) zusätzliche Wärmetauscher (16, 17 bzw. 18) zugeordnet sind.

11. Vorrichtung nach Ansprüchen 7 bis 10, dadurch gekennzeichnet, daß die Abführungseinrichtung (11) für das Fluidisierungsgas zumindest der ersten Teilkammer (1) mit einer Entstaubungseinrichtung (19a) verbunden ist, während die Abführungseinrichtungen (13, 14) aus anderen Teilkammern (3, 4), die das Ende der langgestreckten Fluidisierungskammer bilden, in die Zuführungseinrichtungen (9, 10) für das Fluidisierungsgas der jeweils gleichen Teilkammer (3, 4) einmünden.

12. Vorrichtung nach Ansprüchen 7 bis 11 ; dadurch gekennzeichnet, daß die Abführungseinrichtungen für das Fluidisierungsgas zusammengeführt in eine Entstaubungseinrichtung einmünden, deren Abgasleitung in die Zuführungsleitung für das Fluidisierungsgas einmündet.

## Claims

1. A process for the electrostatic separation of salt mixtures, in particular crude potassium salts, by swirling up the finely ground salt mixture by means of air or inert gas to form a fluidised bed in which the salt mixture is brought into contact with conditioning agents and triboelectrically charged, before it is introduced into the feed apparatus of an electrostatic free fall separator and separated therein into its components, wherein the conditioning agents are supplied to the salt mixture mixed with air or inert gas, characterised in that finely divided solid or liquid conditioning agents, swirled up in an air or inert gas flow at ambient temperature, are blown directly into a region of the fluidised bed in which the temperature of the salt mixture is at least 45°C while, when using vaporisable conditioning agents the conditioning agent which is vaporised in a compressed air flow is blown above the feed flow plate portion into the fluidised bed of the salt mixture, more specifically in a region of the fluidised bed in which the temperature of the particles of the salt mixture is considerably below the temperature of the compressed air flow which contains the conditioning agent in vapour form.

2. A process according to claim 1 characterised in that, when using solid or liquid conditioning agents, they are blown into the fluidised salt mixture approximately at the middle of the length of the fluidised bed.

3. A process according to claims 1 and 2 characterised in that the conditioning agent is blown into the fluidised bed of the salt mixture slightly above the feed flow plate portion and beneath the heating device disposed thereabove.

4. A process according to claim 3 characterised in that the temperature of the particles of the salt mixture in the region of the fluidised bed in which the compressed air flow containing the conditioning agent in vapour form impinges on the particles of the salt mixture is about 100°C below the temperature of the compressed air flow which contains the conditioning agent in vapour form.

5. A process according to claims 1 to 4 characterised in that the conditioning agent is blown into the fluidised bed of the salt mixture only after the latter is substantially freed of entrained dust.

6. A process according to claims 1 to 5 characterised in that the salt mixture is fluidised to provide a bed height of 30 to 120 cm.

7. An apparatus with an elongate fluidisation chamber which is separated by feed flow plate portions from the subjacent feed flow chambers with feed lines for the fluidisation gas and has feed and discharge means for the salt mixture and possibly means for influencing the temperature of the fluidisation gas, for carrying out the process according to claims 1 to 6, characterised in that the elongate fluidisation chamber is subdivided in respect of its length into a plurality of chamber portions, each of which is provided with feed and discharge means for the fluidisation gas, wherein a feed means for conditioning agent opens into one of the chamber portions.

8. Apparatus according to claim 7 characterised in that the elongate fluidisation chamber is subdivided into three chamber portions, wherein the length of the first chamber portion is from 20 to 40% of the overall length of the elongate fluidisation chamber , the length of the second chamber portion is from 40 to 50% of said overall length and the length of the third chamber portion is from 20 to 40% of said overall length.

9. Apparatus according to claims 7 and 8 characterised in that the total of the lengths of the chamber portions from the chamber portion with the feed means for the conditioning agent to the end of the elongate fluidisation chamber is from 40 to 60% of the overall lengthof the elongate fluidisation chamber.

10. Apparatus according to claims 7 to 9 characterised in that additional heat exchangers (16, 17 and 18 respectively) are associated with the chamber portions (1, 2, 3 and 4).

11. Apparatus according to claims 7 to 10 characterised in that the discharge means (11) for the fluidisation gas of at least the first chamber portion (1) is connected to a dust removal means (19a) while the discharge means (13, 14) from other chamber portions (3, 4) which form the end of the elongate fluidisation chamber into the feed means (9, 10) for the fluidisation gas of the respective same chamber portion (3, 4).

12. Apparatus according to claims 7 to 11 characterised in that the discharge means for the fluidisation gas, being brought together, open into a dust removal means whose gas discharge line opens into the feed line for the fluidisation gas.

## Revendications

1. Procédé de séparation électrostatique de mélanges de sels, notamment de sels bruts de potassium, par mise en tourbillonnement du mélange de sels finement broyé au moyen d'air ou de gaz inerte en un lit fluidisé, dans lequel le mélange de sels est mis en contact avec des agents de conditionnement et est chargé triboélectriquement, avant d'être introduit dans le dispositif de chargement d'un séparateur électrostatique à chute libre et d'y être séparé en ses constituants, les agents de conditionnement étant amenés au mélange de sels mélangé à de l'air ou du gaz inerte, caractérisé en ce qu'il consiste à insuffler des agents de conditionnement solides ou liquides, à l'état finement divisé, dans un courant d'air ou de gaz inerte tourbillonnant à la température ambiante, directement dans une partie du lit fluidisé dans laquelle la température du mélange de sels s'élève à au moins 45°c, tout en insufflant, en utilisant des agents de conditionnement susceptibles de s'évaporer, l'agent de conditionnement évaporé dans un courant d'air sous pression, au-dessus du plateau d'entrée dans le lit fluidisé du mélange de sels, et cela dans une partie du lit fluidisé dans laquelle la température des particules du mélange de sels est nettement inférieure à la température du courant d'air comprimé qui contient l'agent de conditionnement sous forme de vapeur.

2. Procédé suivant la revendication 1, caractérisé en ce que, quand on utilise des agents de conditionnement solides ou liquides, ceux-ci sont insufflés dans le mélange de sels fluidisé à peu près au milieu de la longueur du lit fluidisé.

3. Procédé suivant la revendication 1 et 2, caractérisé en ce qu'il consiste à insuffler l'agent de conditionnement dans le lit fluidisé du mélange de sels, un peu au-dessus du plateau d'arrivée et en-dessous du dispositif de chauffage se trouvant au-dessus.

4. Procédé suivant la revendication 3, caractérisé en ce que la température des particules du mélange de sels dans la partie du lit fluidisé dans lequel le courant d'air comprimé contenant l'agent de conditionnement, sous forme de vapeur, rencontre les particules du mélange de sels, est inférieure de 100°C environ à la température du courant d'air comprimé qui contient l'agent de conditionnement sous forme de vapeur.

5. Procédé suivant l'une des revendications 1 à 4, caractérisé en ce qu'il consiste à insuffler l'agent de conditionnement dans le lit fluidisé du mélange de sels seulement après que celui-ci a été débarrassé, dans une grande mesure, de la poussière entraînée.

6. Procédé suivant les revendications 1 à 5, caractérisé en ce qu'il consiste à fluidiser le mélange de sels jusqu'à une hauteur de lit de 30 à 120 cm.

7. Appareil à chambre de fluidisation oblongue, qui est séparée par des plateaux d'entrée des chambres d'entrée sous-jacentes, qui a des conduits d'amenée pour le gaz de fluidisation et qui comporte des dispositifs d'amenée et d'évacuation du mélange de sels ainsi que, le cas échéant, des dispositifs destinés à influencer la température du gaz de fluidisation, pour la mise en oeuvre du procédé suivant les revendications 1 à 6, caractérisé en ce que la chambre de fluidisation oblongue est subdivisée, dans sa longueur, en plusieurs chambres partielles dont chacune est munie de dispositifs d'amenée et d'évacuation du gaz de fluidisation, un dispositif d'amenée de l'agent de conditionnement débouchant dans l'une des chambres partielles.

8. Appareil suivant la revendication 7, caractérisé, en ce que la chambre de fluidisation oblongue est subdivisée en trois chambres partielles, la longueur de la première chambre partielle représentant de 20 à 40%, celle de la deuxième chambre partielle de 40 à 50% et celle de la troisième chambre partielle de 20 à 40% de la longueur totale de la chambre de fluidisation oblongue.

9. Appareil suivant les revendication 7 et 8, caractérisé en ce que la somme des longueurs des chambres partielles, de la chambre partielle ayant le dispositif d'amenée de l'agent de conditionnement à l'extrémité de la chambre de fluidisation oblongue, représente de 40 à 60% de la longueur totale de la chambre de fluidisation oblongue.

10. Appareil suivant les revendication 7 à 8, caractérisé en ce qu'aux chambres partielles (1, 2, 3 et 4) sont associés des échangeurs de chaleur (16, 17 et 18) supplémentaires.

11. Appareil suivant les revendication 7 à 10, caractérisé en ce que le dispositif d'évacuation (11) du gaz de fluidisation d'au moins la première chambre partielle (1) communique avec un dispositif de dépoussiérage (19a), tandis que les dispositifs d'évacuation (13, 14) des autres chambres partielles (3 et 4) qui forment l'extrémité de la chambre de fluidisation oblongue, débouchent dans les dispositifs d'amenée (9, 10) du gaz de fluidisation des chambres partielles (3, 4) identiques.

12. Appareil suivant les revendication 7 à 11 caractérisé en ce que les dispositifs d'évacuation du gaz de fluidisation débouchent ensemble dans un dispositif de dépoussiérage, dont le conduit pour l'effluent gazeux débouche dans le conduit d'amenée du gaz de fluidisation.